Europäisches Patentamt

European Patent Office

Office européen des brevets

(19)

(11) Publication number: **0 450 696 A1**

## (12) EUROPEAN PATENT APPLICATION

(21) Application number: **91200633.5**

(22) Date of filing: **21.03.91**

(51) Int. Cl.5: **F03D 7/06**

(30) Priority: **04.04.90 BE 9000376**

(43) Date of publication of application:
**09.10.91 Bulletin 91/41**

(84) Designated Contracting States:
**AT CH DE DK ES FR GB GR LI NL SE**

(71) Applicant: **Manders, Antonius**
**Willem Elschotstraat 3, Bus A 11**
**B-2050 Antwerpen L.O.(BE)**

(72) Inventor: **Manders, Antonius**
**Willem Elschotstraat 3, Bus A 11**
**B-2050 Antwerpen L.O.(BE)**

(74) Representative: **Donné, Eddy**
**Bureau M.F.J. Bockstael nv Arenbergstraat**
**13**
**B-2000 Antwerpen(BE)**

(54) **Windmill.**

(57) Windmill, consisting of a number of windscoops (2) rotatable around a shaft (1), characterized in that at least one windscoop (2) has a movable part (3) that is moved by means of centrifugal force resulting from the rotation of the windmill, such that at least as from a specific number of revolutions the effective surface area of the windscoop (2) is decreased with a further increasing number of revolutions of the windmill.

Fig. 1

This invention relates to a windmill.

It is known that windmills can be equipped with means which limit the revolutions during high wind speeds, this in order to avoid damage to the windmill. A known technique consists in that the sails are rotated around their axial shaft in order by so doing to decrease the effective surface area. These known embodiments show the disadvantage that they present a relatively complicated construction for adjusting the sails, whereby use is often made of constructions of rods and controlled motors.

The present invention relates to a windmill which does not present the aforementioned disadvantage.

For this purpose it consists in a windmill, with as characteristic that at least one windscoop, either a sail or similar, has a movable part that is moved by means of centrifugal force resulting from the rotation of the windmill, such that at least as from a specific number of revolutions the effective surface area of the windscoop is decreased with a further increasing number of revolutions of the windmill.

In the preferred embodiment the windmill is provided with several such movable parts, which each consists of a rotatable flap which rests on a stop, and as from a specific number of revolutions comes loose from the stop under the influence of centrifugal force and is rotated through a specific angle. This construction offers the advantage that it shows a simple construction and is very stable.

The invention also relates to a windmill with as characteristic that it consists of a number of windscoops rotatable around a vertical shaft, which principally extend in horizontal direction and which show a triangular or V-shaped cross-section. The triangular form of the windscoops is hereby directed with one corner forward, while the two sides adjacent to this corner are closed and function as windscoop parts. Because of the horizontal situation and because of the triangular shape the construction is quite simple but still stable, through which the highest efficiency can be achieved.

This horizontal construction also makes it possible to build several mills on top of each other.

Another advantage consists in that the windmill can be utilized in many places, for example can be erected on top of a high building.

The aforementioned horizontal construction is particularly efficient when it is combined with the aforementioned windscoop parts movable under the influence of centrifugal force. The manufacturing costs of such a windmill are after all quite low, in view of its simple construction.

In order to show better the characteristics according to the present invention, some preferred embodiments are described hereafter, as examples and without any restrictive character, with reference to the enclosed drawings, in which:

figure 1 shows a windmill according to the invention;

figure 2 shows on a larger scale a view according to arrow F2 in figure 1;

figure 3 shows a cross-section according to line III-III in figure 2;

figures 4 and 5 show views, respectively according to arrows F4 and F5 in figure 1;

figures 6 to 8 show various embodiments according to a view similar to that from figure 5.

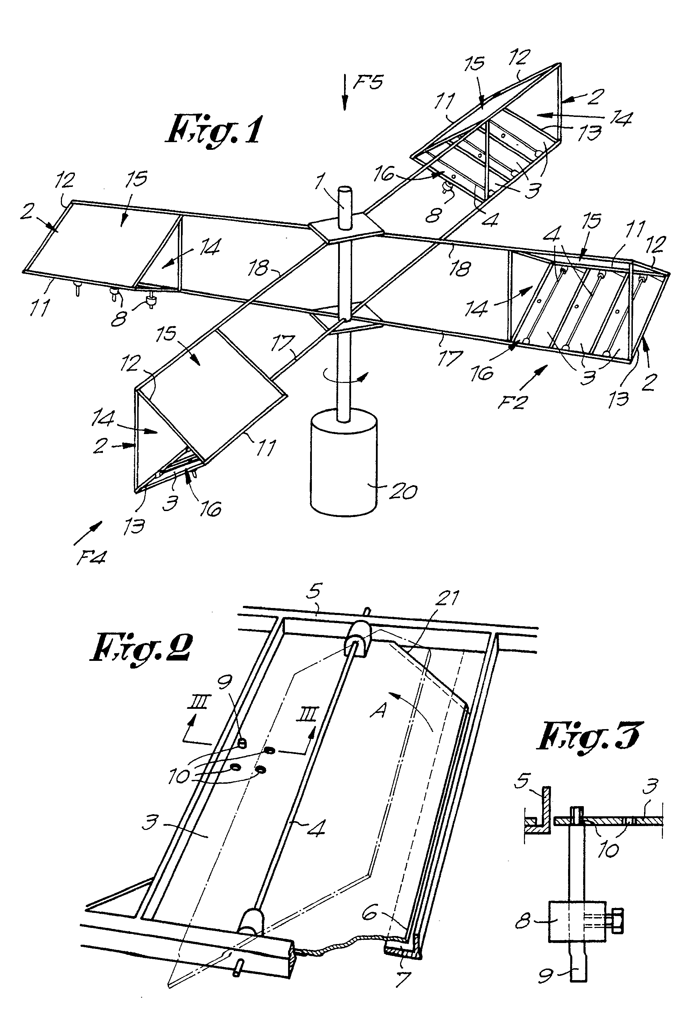

Figure 1 shows a windmill which consists of a vertical shaft 1, around which a number of windscoops 2 are rotatable.

The particularity of the invention consists in that these windscoops 2 have one or several movable parts 3 which are moved by means of centrifugal force resulting from the rotation of the windmill, such that at least as from a specific number of revolutions the effective surface area of the windscoops is decreased with a further increasing number of revolutions of the windmill.

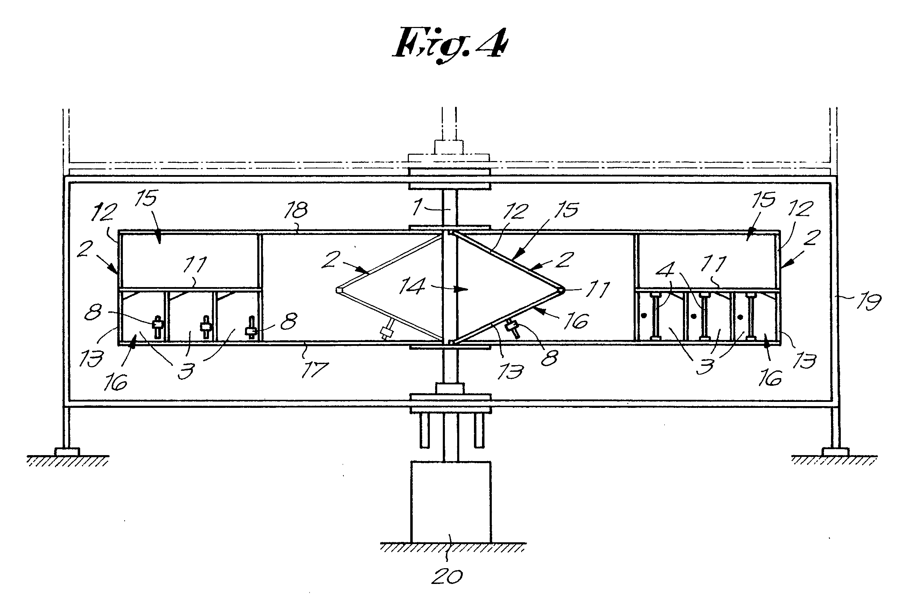

As shown in figure 2 each movable part 3 preferably consists in a flap rotatable along a rotation shaft 4, whereby the rotation shaft 4 is secured in a frame 5. The rotation shaft 4 is so placed that under the influence of its own weight the flap 3 is in a closed position in relation to the frame 5, whereby it rests for example with one edge 6 on a stop 7.

In order to obtain that the flap 3 comes loose from the stop 7 and so rotates, according to arrow A, that the flap opens under the influence of centrifugal force, it is provided with a weight 8 at a well defined location that with the rotation of the windmill exerts a moment around the rotation shaft 4. It is clear that the force exerted by this weight 8 as from a specific number of revolutions overcomes the gravity with which the flap 3 is pressed against the stop 7, after which the flap opens at an angle dependent upon the number of revolutions.

The weight 8 is preferably adjustable, so that the number of revolutions with which the flap opens, can be altered.

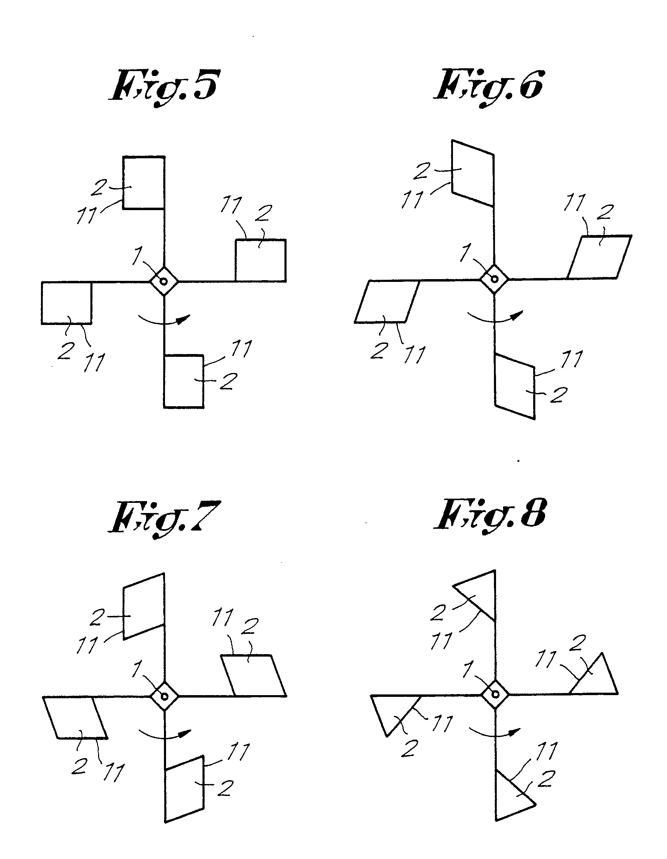

As shown in figure 3 the weight for this purpose is for example movable along a shaft 9 placed perpendicular to the flap 3. Means can possibly be provided for mounting the weight 8 at another location, closer to or farther from the rotation shaft 4, or for installing several weights 8, which in the embodiment shown consist in openings 10 in the flap 3.

It is clear that the weight 8 can also be formed out of the flap 3 itself, for which purpose this is produced in a suitable form and is in a suitable manner mounted rotatably.

The present invention also relates to a specific construction for a windmill, more especially as is shown in figures 1 and 4, with as characteristic that it consists in a vertical shaft 1 and a number of windscoops 2 principally extending in horizontal direction with a triangular or V-shaped cross-section. This section preferably shows the form of an isosceles triangle, whereby the vertex 11 that is bound by the two equal arms 12 and 13 is directed forward according to the direction of rotation, while the third side 14 is situated vertically. The windscoop surfaces 15 and 16 extend according to the direction of the arms 12 and 13. On the side 14 the construction is open.

Each windscoop 2 is preferably attached to two horizontal rods 17 and 18 situated one above the other.

The vertical shaft 1 is secured in a framework 19 with a rectangular cross-section. This construction offers the advantage that several frameworks 19 can be placed one above the other, whereby the respective shafts 1 whether or not coupled to each other drive either a common generator or several generators which can operate separately or otherwise.

The windmill can be utilized for any purpose, but is principally intended for driving a generator 20 or several generators via transmissions whether or not separate.

A particularly advantageous embodiment is obtained when the windmill as described above is combined with the utilization of the aforementioned movable parts 3. These parts 3 are then preferably built into the lower windscoop surfaces 16. In order to achieve that they can hinge freely without being impeded by the windscoop surfaces 15 the parts or flaps 3 show a bevel 21 at an angle.

Figure 5 shows a top view of the form of the windscoops 2. It is clear that other forms can also be utilized, for example as shown in figures 6 to 8.

The present invention is in no way restricted to the embodiments described as examples and shown in the drawings, but such windmill may be developed in various forms and dimensions without departing from the scope of the present invention.

## Claims

1. Windmill, consisting of a number of windscoops (2) rotatable around a shaft (1), characterized in that at least one windscoop (2) has a movable part (3) that is moved by means of centrifugal force resulting from the rotation of the windmill, such that at least as from a specific number of revolutions the effective surface area of the windscoop (2) is decreased with a further increasing number of revolutions of the windmill.

2. Windmill according to claim 1, characterized in that the movable part (3) consists of a rotatable flap.

3. Windmill according to claim 1, characterized in that the rotation shaft (4) of the flap is situated outside the center of gravity of the flap, whereby the flap rests on a stop (7) in condition of rest.

4. Windmill according to claim 2 or 3, characterized in that the flap is provided with a weight (8).

5. Windmill according to claim 4, characterized in that the position of the weight (8) is adjustable, in order to change the influence of centrifugal force.

6. Windmill according to claim 4, characterized in that it has means which permit several weights (8) to be mounted on the movable parts (3).

7. Windmill according to one of the aforementioned claims, characterized in that it consists of a vertical shaft (1) and a number of windscoops (2) principally extending horizontally, with a V-shaped cross-section, of which the vertex (11) is directed forward according to the direction of rotation, while the adjacent sides consist in windscoop surfaces (15, 16).

8. Windmill according to claim 7, characterized in that the movable part (3) is in the lower windscoop surface (16).

9. Windmill according to claim 7, characterized in that each of the lower windscoop surfaces (16) consists of a series of movable parts (3) which can be moved by means of centrifugal force.

10. Windmill, characterized in that it consists of a vertical shaft (1) and a number of windscoops (2) principally extending horizontally, with a V-shaped cross-section of which the vertex (11) is directed forward.

11. Windmill according to claim 10, characterized in that the windscoops (2) are mounted to two rods (18, 19) situated one above the other, to which the windscoops (2) are attached by their free extremities.

**Fig.1**

**Fig.2**

**Fig.3**

*Fig. 4*

EP 0 450 696 A1

# Fig.5

# Fig.6

# Fig.7

# Fig.8

# DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-1 632 322 (STRIPLING)<br>* Page 1, line 94 - page 2, line 125 * | 1,2,3 | F 03 D 7/06 |
| A | FR-A-6 460 71 (VOGELSANG)<br>* Page 1, lines 39-44 * | 4,5 | |
| A | US-A-1 364 681 (BARTO)<br>* Page 1, lines 39-102 * | 3,4,6 | |
| A | FR-A-4 940 18 (JAKOVA MERTURI)<br>* Page 1, line 15 - page 2, line 2 * | 7,10 | |
| A | GB-A-1 324 73 (SEVERIN)<br>* Whole descripition * | 11 | |
| A | US-A-4 365 935 (CHOUSEI ZIKERAN)<br>* Abstract * | 1,2,3,4,9 | |

TECHNICAL FIELDS
SEARCHED (Int. Cl.5)

F 03 D

The present search report has been drawn up for all claims

| Place of search | Date of completion of search | Examiner |
|---|---|---|
| The Hague | 24 June 91 | DE WINTER P.E.F. |